Europäisches Patentamt

European Patent Office

Office européen des brevets

(19)

(11) Veröffentlichungsnummer: **0 032 729**
**B1**

# (12) EUROPÄISCHE PATENTSCHRIFT

(45) Veröffentlichungstag der Patentschrift:
22.05.85

(21) Anmeldenummer: 81100278.1

(22) Anmeldetag: 15.01.81

(51) Int. Cl.⁴: **C 08 J 7/00,** C 08 L 23/06,
B 29 C 71/04

(54) Polyäthylenfolie mit verbesserter Haftung, deren Herstellung und Verwendung.

(30) Priorität: 17.01.80 DE 3001636

(43) Veröffentlichungstag der Anmeldung:
29.07.81 Patentblatt 81/30

(45) Bekanntmachung des Hinweises auf die Patenterteilung:
22.05.85 Patentblatt 85/21

(84) Benannte Vertragsstaaten:
AT BE CH DE FR GB IT LI LU NL SE

(56) Entgegenhaltungen:
DE - A - 1 469 884
DE - A - 1 911 804
FR - A - 2 370 583
US - A - 3 018 189

**Die Akte enthält technische Angaben, die nach dem
Eingang der Anmeldung eingereicht wurden und die
nicht in dieser Patentschrift enthalten sind.**

(73) Patentinhaber: **Alkor GmbH Kunststoffverkauf,
Morgensternstrasse 9 Postfach 71 0109,
D-8000 München 71 (DE)**

(72) Erfinder: **Fink, Roland, Wolfratshauserstrasse 58a,
D-8023 Pullach (DE)**
Erfinder: **Heitz, Heinrich, Dr., Jägerweg 11,
D-8034 Germering (DE)**

(74) Vertreter: **Weickmann, Heinrich, Dipl.-Ing. et al,
Patentanwälte Dipl.-Ing. H.Weickmann Dipl.-Phys.Dr.
K.Fincke Dipl.-Ing. F.A.Weickmann Dipl.-Chem. B. Huber
Dr.-Ing. H. Liska Dipl.-Phys.Dr. J. Prechtel
Postfach 860820, D-8000 München 86 (DE)**

## Beschreibung

Die Erfindung betrifft eine Polyäthylenfolie (PE-Folie) mit verbesserten Haftungseigenschaften und ein Verfahren zu ihrer Harstellung sowie ihre Verwendung.

Zur dekorativen und strapazierfähigen Beschichtung von Blechen, Holzwerkstoffen, Pappen usw. werden PE-Folien bisher wenig eingesetzt, weil die begrenzte Haftung von Lacken und Druckfarben die hierfür erforderliche Oberflächenvergütung unmöglich macht.

Dies gilt besonders, wenn die daraus hergestellten Gegenstände im Gebrauch eine hohe Abriebfestigkeit, Kratzfestigkeit und chemische Beständigkeit besitzen müssen; beispielsweise als Oberfläche für Möbel und Verkleidungsteile.

Die Anwendung in den verschiedenen Bereichen setzt voraus, dass die Kaschierung der Folie auf die verschiedenen Trägermaterialien und die Weiterverarbeitung mit den bisher verwendeten Klebstoffen und Verarbeitungsmaschinen möglich ist.

Wenn es gelingt, die Oberfläche zu vergüten und die permanente Verklebbarkeit zu erreichen, dann liesse sich PE mit seinem breiten Eigenschaftsspektrum in zahlreichen neuen Einsatzgebieten anwenden.

Die entscheidenden Vorteile des PE sind seine umweltfreundliche Anwendung und Abfallvernichtung, seine für diese Anwendung günstigen Basiseigenschaften und seine weitgehenden Modifizierungsmöglichkeiten durch die Polymerisationsverfahren und Copolymerisation mit verschiedenen Monomeren sowie Füllstoffe.

Im Vergleich zu PVC, das bisher für diese Anwendungen häufig eingesetzt wird, ist z.B. die Wärmeformbeständigkeit wesentlich erhöht.

Diese höhere Wärmebeständigkeit erlaubt die wirtschaftliche Beschichtung vorwiegend von Blechen und Holzwerkstoffen unter Verwendung von Reaktionsklebstoffen. Bekanntlich dürfen diese Klebstoffe bei Lagerung und Verweilen in den Auftragswerken der Beschichtungsanlagen nicht reagieren. Diese Bedingung ist erfahrungsgemäss erfüllt, wenn die chemischen Reaktionen erst oberhalb 80°C beginnen. Die wirtschaftliche Heisskaschierung bei Temperaturen über 80°C auf Pressen und Rollenkaschieranlagen ohne Abkühlung ist mit HD-PE (Polyäthylen hoher Dichte) im Gegensatz zu PVC möglich.

Diese Verarbeitungsanforderungen würden zwar auch bestimmte imprägnierte Papiere erfüllen, jedoch ist deren Anwendbarkeit wegen ihrer Sprödigkeit, Feuchtigkeitsempfindlichkeit, begrenzten Lagerfähigkeit, schlechten Wärmeprägbarkeit auf einfache, z.B. ebene Möbelflächen, beschränkt.

Es besteht daher ein Bedarf nach Schaffung einer preisgünstigen thermoplastischen Folie auf Basis PE, die auch mit Reaktionsklebstoffen bei Temperaturen bis 140°C ohne Abkühlung auf die entsprechenden Trägermaterialien kaschiert werden kann und die die chemische und physikalische Widerstandsfähigkeit der bisher bekannten Oberflächenfolien erreicht oder sogar übertrifft.

Voraussetzung hierfür ist eine permanente Haftung der geeigneten Lacke, Druckfarben und Klebersysteme auf PE, wozu eine dauerhafte Verbesserung der oberflächenenergetischen Daten erforderlich wäre.

Verfahren zur Verbesserung der Haftungseigenschaften bzw. Oberflächenadhäsion von Filmen, insbesondere von Polyolefinfilmen, sind bekannt. Ein Beispiel dafür ist die Corona-Behandlung (Glimmentladungsbehandlung; vgl. Kunststoffe 69 (1979), S. 71–75; Vortragsveröffentlichung Münchner Klebstoff- und Veredelungsseminar 1979 S. 60–70). Diese Behandlung ergibt zwar einer erhebliche Verbesserung, der Effekt verschwindet jedoch während der Lagerung und/oder bei Einwirkung höherer Temperaturen.

Ein weiteres Verfahren besteht in der Flammbehandlung von Folien. Hier gelten die gleichen Nachteile wie bei der Corona-Behandlung. Weiter ist die chemische Behandlung mit Ozon, Fluor, Chlor usw. bekannt. Von Nachteil ist hier besonders die problematische Anwendung wegen der chemischen Aggressivität dieser Agenzien. Ein weiteres Verfahren besteht in der Bestrahlung mit energiereichen Strahlen, wie Elektronenstrahlen, UV-Strahlen, Laserstrahlen und dergleichen. Diese Verfahren sind relativ aufwendig, verlangen meist die Mitverwendung von Sensibilisatoren, und die Dauerhaftigkeit des Effekts ist dabei unterschiedlich.

Eine permanente Verbesserung der Oberflächenadhäsion lässt sich durch chemische Pfropfung unter Anwendung energiereicher Strahlen erzielen. Dieses Verfahren ist jedoch zu aufwendig, um für das in Betracht kommende Anwendungsgebiet geeignet zu sein.

Aufgabe der Erfindung ist es, die oben beschriebenen Probleme zu lösen und eine Folie sowie ein Verfahren zu ihrer Herstellung zu schaffen, welche den oben erläuterten Bedingungen entspricht.

Gelöst wird diese Aufgabe erfindungsgemäss durch eine Polyäthylenfolie mit durch Oberflächenaktivierung verbesserten Haftungseigenschaften, die gekennzeichnet ist durch einen Gehalt an Cellulose mit einem mittleren Teilchendurchmesser von 5 bis 100 µm und einer grössten mittleren Länge der Cellulose bis 200 µm.

Der Erfindung liegt die überraschende Beobachtung zugrunde, dass ein Gehalt an feinteiliger Cellulose im PE sowohl die Wirksamkeit als auch die Dauerhaftigkeit einer Oberflächenbehandlung entscheidend verbessert, so dass sich die Folien für die eingangs erwähnten Anwendungsgebiete besonders gut eignen.

Aus der FR-A- 2 370 583 ist bereits ein Verbundmaterial aus Metallfolien und einem mit Carbonsäure modifizierten Polyolefin, welches cellulosische Teilchen enthält, bekannt. Hierbei wird jedoch die Haftung im wesentlichen durch die Carbonsäureanteile des Polyolefincopolymers erzielt und bezüglich der cellulosischen Teilchen werden zum Beispiel harzreiche Holzfasern, Stroh- und Papierpulpe als in gleicher Weise geeignet angegeben, während reine Cellulose nicht erwähnt wird. Ausserdem wird dort keine Folie mit dem Metall verpresst, sondern eine nach der Papierherstellungstechnik gewonnene Bahn.

Durch Anwendung geeigneter Lacksysteme würden sich die Anforderungen an die Gebrauchseigenschaften, wie Abriebfestigkeit, Kratzfestigkeit, chemische Beständigkeit und Härte, ebenso optimal erfüllen wie die Verklebung mit dem in der Möbelindustrie bewährten Harnstoff-Formaldehyd-Harz (UF-Harz). Bei der Blechkaschierung können ebenfalls preisgünstigere Systeme als bei der PVC-Verklebung angewendet werden.

Im Rahmen der Erfindung geeignet sind feinteilige Cellulose, hergestellt nach dem Sulfit- oder Sulfatverfahren, die bevorzugt wird, sowie native oder regenerierte Cellulose.

Die Cellulosemenge liegt zweckmässig zwischen 3 und 50 Gew.-%, bezogen auf die Summe von PE und Cellulose. Wird ein Gehalt von 50% überschritten, so werden die Festigkeitseigenschaften drastisch verschlechtert.

Unter 3% ist die erzielte Verbesserung der Oberflächenaktivierung nicht ausgeprägt genug. Bevorzugt enthält die Folie 3 bis 30 Gew.-% Cellulose.

Der Feinheitsgrad der Cellulose in der erfindungsgemässen Folie liegt zweckmässig zwischen 1 und 100 μ bei einer Faserdicke von 10 bis 30 μ. Ein feinerer Verteilungsgrad ist zu aufwendig, bei grösseren Partikeln treten Probleme bei der Herstellung glatter, dünner Folien auf. Bei nativer und regenerierter Cellulose können jedoch auch Teilchen bis zu 100 μ dick einer grössten mittleren Länge von 200 μ verwendet werden, ohne dass hinsichtlich der Folienbildung grundsätzliche Schwierigkeiten auftreten.

Dagegen zeigt Holzmehl gleicher Teilchengrösse (Lignocell HB 150) bei vergleichbaren Zusätzen und Vorbehandlungen die gleichen schlechten Haftungseigenschaften wie PE ohne Zusatz.

Als Polyäthylen eignen sich im Rahmen der Erfindung alle Arten von Polyäthylen, einschliesslich Polyäthylen hoher Dichte (HD-PE), Polyäthylen niedriger und mittlerer Dichte (LD-PE und LLD-PE) sowie Copolymerisate, welche eine Wärmebeständigkeit VSP A über 80 °C aufweisen sowie Gemische dieser Stoffe. Bei den Copolymeren kommen vor allem solche mit Vinylverbindung und längerkettigen α-Olefinen in Betracht.

Die erfindungsgemässe Folie kann zusätzlich auch mineralische Füllstoffe enthalten. Derartige Füllstoffe für Polymerfolien sind bekannt. Besonders geeignet und daher bevorzugt werden Glimmer, Talkum, Silikate und Kieselsäuren in ihren verschiedenen Formen. Beispiele für andere brauchbare mineralische Füllstoffe sind Carbonate, insbesondere Calciumcarbonate, wie Kalkstein und Kreide, sowie Magnesiumcarbonate und dergleichen.

Durch den Zusatz geeigneter mineralischer Füllstoffe lassen sich Eigenschaften, wie Vicatpunkt, Shorehärte und Zugfestigkeit beeinflussen. Falls derartige mineralische Füllstoffe vorhanden sind, enthält die Folie zweckmässig 3 bis 50 Gew.-%, vorzugsweise 3 bis 30 Gew.-%., bezogen auf die Summe von Polyolefin und Cellulose.

Ausserdem kann die Folie noch ein oder mehrere organische Modifizierungsmittel enthalten. Diese dienen zur Regelung von Zähigkeit, Kalandrierbarkeit, Extrudierbarkeit und ähnlichen Eigenschaften. Eine bevorzugte Gruppe hierfür sind Blockpolymere von Styrol mit Elastomeren, z.B. mit Butadien oder Isobutylen oder Isopren. Andere geeignete Modifizierungsmittel sind Copolymerisate auf Basis Styrol-Butadien, Methacrylat-Butadien-Styrol. Polyolefine, die funktionelle Gruppen enthlaten, z.B. Copolymerisate oder Pfropfcopolymerisate von Äthylen und reaktiven Monomeren, eignen sich besonders zur Beeinflussung von speziellen physikalischen Eigenschaften und der Verklebbarkeit. Derartige Modifizierungszusätze sind zweckmässig in einer Menge von 0,5 bis 20 Gew.-%, vorzugsweise von 2 bis 10 Gew.-%, bezogen jeweils auf die Summe von Polyolefin und Cellulose, vorhanden.

Die bessere Effektivität der Corona-Behandlung durch den Zusatz von Cellulose zeigen die in Tabelle 1 angegebenen Versuchsergebnisse. Dargestellt ist die Oberflächenspannung (mN/m) in Abhängigkeit der spez. Energie der Corona-Behandlung bei gleicher PE-Rezeptur mit und ohne Cellulosezusatz.

Tabelle 1

| Spez. Energie (W. mm/m²) | 0 | 0,8 | 1,25 | 2,5 | 5,0 |
|---|---|---|---|---|---|
| Oberflächenspannung (mN/m) ohne Cellulose | 34 | 36 | 38–42 | 44 | 48–52 |
| Oberflächenspannung (mN/m) 20 Gew.-% Cellulose | 34 | 46 | 52 | 56–61 | 61–72 |

Den Einfluss des Celluloseanteils bei gleicher Corona-Behandlung zeigt Tabelle 2.

Tabelle 2

| Folie-Nr. | Polyäthylen | Cellulose Gew.-% | Oberflächen-spannung vor Corona-Behandlung (mN/m) | Oberflächen-spannung nach Corona-Behandlung (mN/m) |
|---|---|---|---|---|
| 1 | Polyäthylen [1] | – | 34–36 | 44–48 |
| 2 | Polyäthylen [1] | 1 | 34–36 | 58 |
| 3 | Polyäthylen [1] | 5 | 34–36 | >61 |
| 6 | Polyäthylen [1] | 10 | 34–36 | 72 |
| 7 | Polyäthylen [1] | 20 | 34–36 | 72 |

[1] Hostalen® GC 7260

Die Dauerhaftigkeit des Effekts der Corona-Behandlung ist aus Tabelle 3 zu erkennen.

Tabelle 3

| Folie-Nr. | Lagerungsdauer bei Raumtemperatur | | | |
|---|---|---|---|---|
| | 1 Std. | 3 Tage | 3 Wochen | 3 Monate |
| 1 | 48 | 45 | 38 | – |
| 2 | 58 | 52 | 48 | 46 |
| 3 | 61 | 61 | 61 | 61 |
| 6 | 72 | 72 | 72 | 72 |
| 7 | 72 | 72 | 72 | 72 |

Die bekannte Erscheinung, dass der Effekt der Corona-Behandlung durch Lagerung drastisch verschlechtert wird (Kunststoffe 69 (1979), S. 74), tritt bei der erfindungsgemässen Folie nicht auf.

Auch die bekannte Tatsache, dass der Effekt bereits bei Erwärmung über 60 °C schnell und fast völlig gelöscht wird, wird nicht festgestellt.

Die Unabhängigkeit des bei der erfindungsgemässen Folie erzielten Aktivierungseffekts von der Lagerungsdauer und Temperatur zeigen auch die Versuchsergebnisse, die an kalandrierten Folien gemessen wurden.

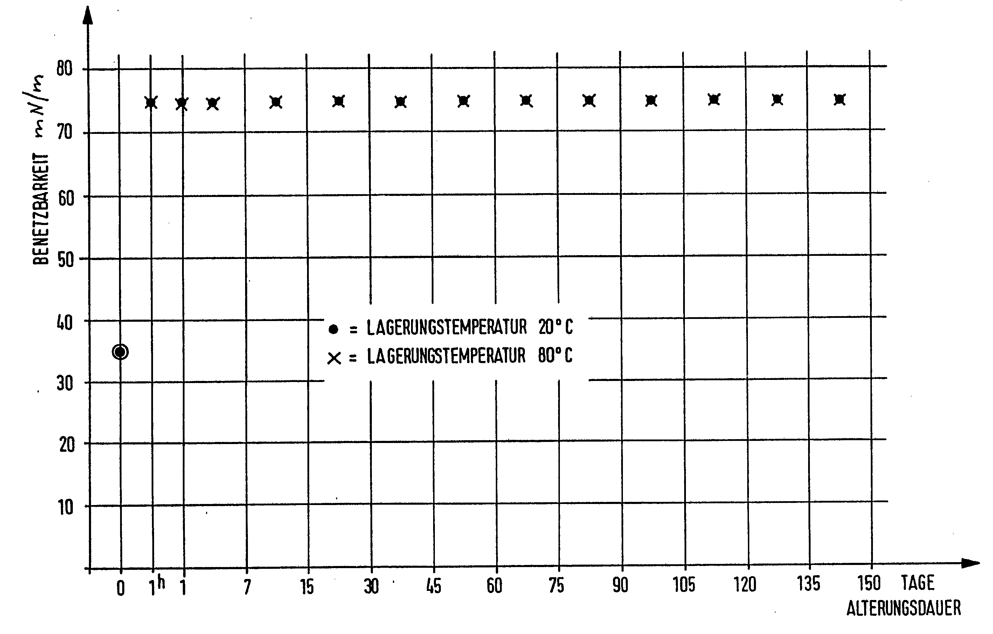

Die beigefügte Zeichnung zeigt eine graphische Darstellung der Oberflächenspannung einer derartigen erfindungsgemässen Folie bei 140tägiger Lagerung bei zwei verschiedenen Temperaturen.

Diese Zeichnung wird nachstehend näher erläutert:

Sie zeigt die Benetzbarkeit in mN/m für eine erfindungsgemässe Folie aus Polyäthylen mit 10% Cellulosegehalt in Abhängigkeit von der Lagerungsdauer nach Bestrahlung. Die Benetzbarkeit vor der Corona-Behandlung betrug 35 mN/m; durch die Corona-Behandlung steigt sie auf 75 mN/m. Anschliessend wird je eine Probe bei 20 und bei 80 °C 140 Tage lang gelagert. Dabei wird keinerlei Veränderung der Benetzbarkeit fesgestellt.

Es ist bekannt, dass eine Korrelation zwischen Haftung und Oberflächenspannung nicht in allen Fällen gegeben ist (Veröffentlichung Münchner Veredelungsseminar 1979, S. 60). Deshalb wurde die Haftung in Abhängigkeit vom Celluloseanteil mittels Harnstoff-Formaldehyd-Harz-Klebstoff geprüft, der zu PE keinerlei Haftung besitzt. Die Permanenz der Haftung wurde im Kurzversuch nach Lagerung bei 90 °C getestet.

Tabelle 4 zeigt das Ergebnis einer Versuchsreihe, bei der Folien gleicher PE-Rezeptur unter gleichen Bedingungen Corona-vorbehandelt und mit Harnstoff-Formaldehyd-Harz bei 130 °C mit 10 kP/$^{T}$cm² Druck in 20 Sekunden verpresst wurden.

Tabelle 4

| Cellulose-Anteil Gew.-% | 0 | | 5 | | 10 | | 20 | |
|---|---|---|---|---|---|---|---|---|
| Lagerung | 1 Std/20°C | 1 Tag/90°C | 1 Std/20°C | 1 Tag/90°C | 1 Std/20°C | 1 Tag/90°C | 1 Std/20°C | 1 Tag/90°C |
| Oberflächen-spannung (mN/m) | 52 | 42 | 58 | 49 | 61 | 61 | 61–72 | 61–72 |
| Schälfestigkeit kP/2,4 cm (N/2,4 cm) | 0,3 (2,94) | 0,1 (0,98) | 0,6 (5,9) | 0,25 (2,45) | 2,5 (24,5) | 2,5 (24,5) | 3,75[+] (36,8) | 3,75[+] 36,8) |

[+] Folie gerissen

Diese Ergebnisse belegen ebenfalls, dass die Erhöhung der Oberflächenenergie durch Zusatz der Cellulose und Anwendung der Corona-Behandlung im Gegensatz zu bekannten Erkenntnissen permanent ist.

Aus Tabelle 5 ist zu ersehen, dass es sich bei der Haftung bei PE mit Zusatz von Cellulose nicht um einen «Monolayer»-Effekt handelt. Die Proben wurden mit gleicher Intensität Corona-vorbehandelt, die Oberflächenspannung gemessen und danach definiert mit einem Wollappen abgerieben, wieder die Oberflächenspannung gemessen und danach mit dem Harnstoff-Formaldehyd-Harz unter den oben beschriebenen Bedingungen gepresst.

Tabelle 5

|  |  | HD-PE ohne Füllstoffe | HD-PE mit 20% Kreide | HD-PE mit 20% Cellulose |
|---|---|---|---|---|
| Oberflächenspannung nach Coronabehandlung | mN/m | 52 | 58 | 61–72 |
| Oberflächenspannung nach Abwischen | mN/m | 32 | 32 | 38 |
| Schälfestigkeit nach Abwischen | kp/2,4 cm (N/2,4 cm) | 0 (0) | 0,2 (1,96) | 2,5 (24,5) |

In Analogie hierzu zeigen Folien mit mehr als 5% Cellulose, die ein Jahr nach der Vorbehandlung verklebt wurden, keine Haftungsänderung. Die anderen vorerwähnten Vorbehandlungsverfahren ergeben überwiegend auch eine gute Haftung, wenn die Oberflächenspannung und auch die Permanenz ausreichend hohe Werte hatten.

Ein weiterer Gegenstand der Erfindung ist ein Verfahren zur Herstellung einer Polyäthylenfolie mit verbesserter Adhäsion durch Formung der Folie nach üblichen Methoden und Anwendung einer Oberflächenaktivierungsbehandlung, welches dadurch gekennzeichnet ist, dass man als Füllstoff feinteilige Cellulose zusetzt. Vorzugsweise werden 3 bis 50 Gew.-%, besonders bevorzugt 3 bis 30 Gew.-% Cellulose zugesetzt, bezogen auf die Summe von Polyolefin und Cellulose. Cellulosefasern eignen sich bis zu einer Länge von 200 µm bei einem mittleren Durchmesser bis 100 µm bei entsprechenden Foliendicken.

Bezüglich der bevorzugten Polyäthylene gelten die obigen Ausführungen. Für die Herstellung der Folie eignen sich alle üblichen und dem Fachmann geläufigen Folienherstellungsmethoden. Es hat auch keine Auswirkung auf die Haftung, ob man die Cellulose pulverförmig oder als granuliertes Masterbatch (PE-Basis) zugibt.

Bei der Folienherstellung können zusätzlich mineralische Füllstoffe oder/und Modifizierungsmittel zugesetzt werden. Hierfür gelten die obigen Angaben über die Folienzusammensetzung entsprechend.

Im allgemeinen kann die Oberflächenaktivierung durch Bestrahlung oder durch Behandlung mit einer Flamme oder Ozon erfolgen. Besonders bevorzugt wird die Corona-Behandlung, andere Bestrahlungsmethoden verwenden Elektronenstrahlen, UV-Strahlen oder Laserstrahlen.

Durch die Erfindung wird, wie bereits erwähnt, die Oberflächenadhäsion von Polyäthylenfolien wesentlich gesteigert und dadurch der Einsatz derartiger Folien zum Kaschieren, Bedrucken, Lackieren und Verkleben, insbesondere bei den modernen Anlagen, welche kurze Prozesszeiten und möglichst hohe Temperaturen anwenden, wesentlich verbessert oder überhaupt erst ermöglicht. Bei Verklebungen der erfindungsgemässen Folie mit beispielsweise UF-Harz ergab sich auch nach Monaten noch keine Veränderung der Haftung. Die Widerstandsfähigkeit der Oberflächenaktivierung gegenüber Temperatureinfluss wird ebenfalls erheblich verbessert. Beispielsweise zeigen die Haftungen von erfindungsgemässen Folien, die mittels UF-Harz auf Spanplatten kaschiert wurden, bei Kaschiertemperaturen zwischen 80 und 140 °C bei 30 Sekunden Presszeit keinen Unterschied.

Druckfarben, beispielsweise solche auf Basis von Terpolymeren aus Vinylchlorid-Vinylacetat-Maleinsäure von OH-Gruppen enthaltenden Vinylpolymeren, aber auch die üblichen PE-Druckfarben, weisen ebenso gute Haftung auf wie Reaktionslacke, beispielsweise auf Basis Polyurethan, Melaminharzen, sowie auch UV-härtende Polyester-Epoxid und Polyurethanacrylate. Selbst nach 1000stündiger Xenotestbewitterung und im Tropentest konnte eine Änderung der Lackhaftung ASTM Norm D 2141-63T nicht festgestellt werden.

Durch Zusatz von mineralischen Füllstoffen und/oder organischen Modifizierungsmitteln können die Eigenschaften der Folie in weitem Umfang variiert werden, ohne dass dadurch die vorteilhaften Haftungseigenschaften verschlechtert werden. Beispielsweise wird die durch Corona-Behandlung einer Folie aus 95 Teilen Polyäthylen und 5 Teilen Cellulose erzielte Oberflächenadhäsion durch Zusatz von 20 oder 30 Teilen Talkum nicht beeinflusst.

Die üblichen Farbstoffe und Pigmente wirken sich ebenfalls nicht nachteilig aus.

Die erfindungsgemässen Folien können auch direkt durch Schmelzverklebung mit Metallen, Holz, Polymeren und Copolymeren mit polaren Gruppen und dergleichen ohne Klebstoff verbunden werden und zeigen gute und permanente Haftung.

Die Kaschierung ist auch bei niedrigen Temperaturen, z.B. mit Epoxyharzen und Polyurethanen sowie Vinylacetat-Copolymeren möglich.

Die folgenden Beispiele erläutern die Erfindung weiter.

Beispiel 1

Polyäthylen Mfl 190/2 = 8 (g/10 min) Dichte, 0,958 g/cm³ (Hostalen™ GC 7260) und Cellulose mit einer Teilchengrösse < 50 μ (Arbocel™ B 600/30) wurden im Gewichtsverhältnis 1 : 1 gemischt und auf einem Walzwerk bei 160 °C 10 min plastifiziert und nach dem Abkühlen granuliert.

10 Gew.-Teile dieses Granulats wurden 90 Gew.-Teilen des gleichen Polyäthylens beigemischt und daraus auf einem Einschneckenextruder 60 mm Durchmesser mit Breitschlitzdüse bei einer Massetemperatur von ca. 180 °C zu einer 80 μm dicken Folie extrudiert.

Eine Corona-Behandlung wurde bei 5 m/min Bahngeschwindigkeit durchgeführt (Demes VM Vorbehandlungsgerät). Die so behandelte Folie hatte folgende Eigenschaften:

| Oberflächenspannung nach | 1 Std. | 58 mN/m |
|---|---|---|
| | 3 Wochen | 48 mN/m |
| | 3 Monaten | 46 mN/m |
| | nicht vorbehandelt | 34–36 mN/m |
| Wärmebeständigkeit: VSP/A | 125°C | |
| Härte Shore D | 61 | |
| Zugfestigkeit (längs) | 28 N/mm² | |
| Abzugskraft bei UF-Harzverklebung: [1] | > 3,0 kp/2,4 cm-Folienabriss (> 29,4 N/2,4 cm) | |

[1] Rezeptur 100 Gew.-Teile Aerolite® 306
           50 Gew.-Teile Härter W 170
           70 Gew.-Teile Wasser

Pressbedingungen:
Temperatur 130°C; Zeit 10 Sek.; Druck 10 kp/cm² (9,81 bar).

Die Verklebung wurde 3 Tage nach der Vorbehandlung durchgeführt unter Verwendung einer üblichen Spanplatte.

Beispiel 2 (Vergleich)

Das in Beispiel 1 verwendete Polyäthylengranulat wurde ohne Zusätze unter den dort angegebenen Bedingungen extrudiert und aktiviert.

| Oberflächenspannung nach | 1 Std. | 50 mN/m |
|---|---|---|
| | 3 Wochen | 38 mN/m |
| | 3 Monaten | 36 mN/m |
| | nicht vorbehandelt | 34–36 mN/m |
| Wärmebeständigkeit: VSP/A | 125°C | |
| Härte Shore D | 60 | |
| Zugfestigkeit (längs) | 30 N/mm² | |
| Abzugskraft (Verklebung wie bei Beispiel 1): | ungenügend | |

Beispiel 3

Eine Mischung aus 92,5 Gew.-Teilen Polyäthylen (Mfl 190/2 = 0,8 g/10 min, Dichte 0,962 g/cm³) (Eltex™ B 2008 P), 2,5 Gew.-Teilen S-B-S Blockpolymer (Cariflex™ 1102), 5 Gew.-Teilen Cellulose (Arbocel B 600/30) und 10 Gew.-Teilen TiO₂ wurde in pulverförmigem Zustand gemischt.

Die Plastifizierung erfolgte auf Walzwerken bei 150 °C, die Kalandrierung bei Walzentemperaturen von 140 bis 180 °C. Die Aktivierungsbehandlung des 80 μm dicken Films erfolgte beidseitig unter den in Beispiel 1 angegebenen Bedingungen.

Die erhaltene Folie wurde mit einem Polyurethanlack (aus Desmophen™ 1300 und Desmodur™ HL) entsprechend den Empfehlungen des Herstellers lackiert.

| Oberflächenspannung nach | 1 Std. | 61 mN/m |
|---|---|---|
| | 3 Wochen | 61 mN/m |
| | 3 Monaten | 61 mN/m |
| | nicht vorbehandelt | 34–36 mN/m |
| Wärmebeständigkeit: VSP/A | 130°C | |
| Härte Shore D | 61 | |
| Zugfestigkeit (längs) | 32 N/mm² | |

Abzugsfestigkeit nach Verklebung entsprechend      >3,5 kp/2,4 cm
Beispiel 1:      (>34,3 N/2,4 cm);
     Folienabriss

Haftung des Lacks nach Tropentest:      untrennbar
Haftung des Lacks nach
600 Stunden Xenotest:      untrennbar
(Nach ASTM-Norm D 2141-63 T gemessen)

## Beispiel 4

Eine Mischung aus 95 Gew.-Teilen des Polyäthylens von Beispiel 3, 5 Gew.-Teilen der Cellulose von Beispiel 3 und 30 Gew.-Teilen Magnesiumsilikat (Mistron " Vapor) sowie 10 Gew.-Teilen $TiO_2$ wurden entsprechend Beispiel 3 kalandriert und die 80 µm dicken Folien ebenso aktiviert.

Die Lackierung erfolgt hier mit einem modifizierten Lack auf Basis Melaminharz (Cymol " 301).

| Oberflächenspannung nach | 1 Std. | 61 mN/m |
|---|---|---|
| | 3 Tagen | 61 mN/m |
| | 3 Wochen | 61 mN/m |
| | nicht vorbehandelt | 35 mN/m |
| Wärmebeständigkeit VSP/A | | 133°C |
| Härte Shore D | | 65 |
| Zugfestigkeit (längs) | | 33 N/mm² |
| Abzugskraft nach Verklebung entsprechend Beispiel 1: | | >3,75 kp/2,4 cm (>36,8 N/2,4 cm); Folienabriss |
| Lackhaftung nach Beanspruchung entsprechend Beispiel 3: | | untrennbar: |

## Beispiel 5

Eine Mischung aus 60 Gew.-Teilen des Polyäthylens von Beispiel 3, 40 Gew.-Teilen Cellulose gemäss Beispiel 3 und 10 Gew.-Teilen $TiO_2$ wurden entsprechend Beispiel 3 zu einer 80 µm Folie kalandriert und anschliessend entsprechend aktiviert.

Lackiert wurde mit einem UV-reaktiven Lack (Typ 9127 der Fa. Corona) auf Basis von Polyurethanacrylat.

| Oberflächenspannung nach | 1 Std. | ≥72 mN/m |
|---|---|---|
| | 3 Wochen | ≥72 mN/m |
| | 3 Monaten | ≥72 mN/m |
| | nicht vorbehandelt | 35 mN/m |
| Wärmebeständigkeit VSP/A | | 135°C |
| Härte Shore D | | 65 |
| Zugfestigkeit (längs) | | 21 N/mm² |
| Abzugskraft der Verklebung | | >3,5 kp/2,4 cm (>34,3 kp/2,4 cm); Folienabriss |
| Lackhaftung: | | Wie Beispiel 3 |

## Beispiel 6

a) Eine Mischung aus 80 Gew.-Teilen des Polyäthylens von Beispiel 3 und 20 Gew.-Teilen Cellulose gemäss Beispiel 3 wurde entsprechend Beispiel 3 behandelt.

| Oberflächenspannung nach | 1 Std. | ≥72 mN/m |
|---|---|---|
| | 3 Wochen | ≥72 mN/m |
| | 3 Monaten | ≥72 mN/m |
| | nicht vorbehandelt | 34–36 mN/m |
| Wärmebeständigkeit VSP/A | | 130°C |
| Härte Shore D | | 64 |
| Zugfestigkeit (längs) | | 25 N/mm² |

Diese Folie wurde kalt (20 °C) auf eine Spanplatte aufgewalzt, die mit Epoxid-Kleber DC 8720 (der Fa. Daubert, Middlewich, GB) beschichtet war. Nach 12stündiger Lagerung war der Verbund nicht mehr zerstörungsfrei trennbar. Entsprechende Ergebnisse wurden auch mit der modifizierten Vinylacetat-Dispersion (Folienkleber HER der Fa. Isar-Racoll) erhalten.

b) Eine Mischung aus 90 Gew.-Teilen des Polyäthylens von Beispiel 3 und 10 Gew.-Teilen Cellulose gemäss Beispiel 3 wurde entsprechend Beispiel 3 behandelt.

| Oberflächenspannung nach | 1 Std. | ≥72 mN/m |
| | 3 Wochen | ≥72 mN/m |
| | 3 Monaten | ≥72 mN/m |
| | nicht vorbehandelt | 34–36 mN/m |
| Wärmebeständigkeit: | | 128°C |
| Härte Shore D | | 64 |
| Zugfestigkeit (längs) | | 27 N/mm² |

Diese Folie wurde kalt (20 °C) auf eine Spanplatte aufgewalzt, die mit Epoxid-Kleber DC 8720 (der Fa. Daubert, Middlewich, GB) beschichtet war. Nach 12stündiger Lagerung war der Verbund nicht mehr zerstörungsfrei trennbar. Entsprechende Ergebnisse wurden auch mit der modifizierten Vinylacetat-Dispersion (Folienkleber HER der Fa. Isar-Racoll) erhalten.

| Oberflächenspannung nach | 1 Std. | 61 mN/m |
| | 3 Wochen | 58 mN/m |
| | 3 Monaten | noch kein Ergebnis |
| | nicht vorbehandelt | 35 mN/m |
| Wärmebeständigkeit VSP/A | | 125°C |
| Härte Shore D | | 60 |
| Zugfestigkeit (längs) | | 18 N/mm² |
| Abzugskraft nach Verklebung entsprechend | | 3,2 kp/2,4 cm |
| Beispiel 1: | | (31,4N/2,4 cm) |

b) Aus Polyäthylen (Mfl 190/2 = 17 (g/10 min) und Dichte 0,918 g/cm³) (Lupolen 1800 s) und Cellulose (Arbocel B 600-30) wurde ein Batch entsprechend Beispiel 1 hergestellt. 10 Gew.-Teile hiervon wurden 90 Gew.-Teilen gleitmittelhaltigem Polyäthylen (Mfl 190/2 = 0,6 (g/10 min)

| Oberflächenspannung nach | 1 Std. | 58 mN/m |
| | 3 Tagen | 58 mN/m |
| | nicht vorbehandelt | 28–30 mN/m |

Die Abzugsprüfung nach Verklebung entsprechend Beispiel 6 a) mit dem Epoxid-Kleber DC 8720 ergab keine zerstörungsfreie Trennung mehr.

Beispiel 8
Eine Folie aus Polyäthylen hoher Dichte nach

Beispiel 7
a) Eine Mischung aus 90 Gew.-Teilen des Polyäthylens von Beispiel 3 und 10 Gew.-Teilen Baumwolle, gemahlen auf eine Faserlänge von 0,1 mm sowie 10 Gew.-Teilen TiO₂ wurden unter den in Beispiel 3 angegebenen Bedingungen zu 300 µm Folien kalandriert und gemäss Beispiel 1 coronabehandelt.

Dichte 0,92 g/cm³) (Hostalen F 2024) zugemischt und entsprechend Beispiel 1 bei einer Massetemperatur von 190°C zu einer 0,5 mm dicken Folie extrudiert und coronabehandelt. An dieser Folie wurden folgende Eigenschaften gemessen:

Beispiel 1 (HD-PE) (Hostalen GC7260) mit einem Gehalt von 5% Cellulose und eine Folie aus dem gleichen Polymer ohne Cellulose wurden der Flammbehandlung unterworfen und danach die Benetzbarkeit der Oberfläche festgestellt. Die Ergebnisse zeigt nachstehende Tabelle 6.

Tabelle 6

| | Oberflächenspannung | |
| --- | --- | --- |
| | Vor Flammbe-handlung (mN/m) | Nach Flammbe-handlung (mN/m) |
| HD-PE | 34–36 | 38–40 |
| HD-PE + 5% Cellulose | 34–36 | 45–48 |

Beispiel 9
Eine Mischung aus 95 Gew.-Teilen Polyäthylen entsprechend Beispiel 3 und 5 Teilen Alkalicellulose 30 µm Dicke, 0,6 mm Länge wurden auf einem Walzwerk bei 150 °C homogenisiert und zu einem 0,5 mm dicken Film gezogen und anschliessend entsprechend Beispiel 1 aktiviert.
Die Verklebung entsprechend Beispiel 1 ergab gute Haftung. Die Oberfläche des Films war unbefriedigend.

**Beispiel 10**

Der Mischung aus Polyäthylen und Cellulose nach Beispiel 1 wurden 10% eines Äthylen-Vinylalkohol-Copolymeren (30% Vinylalkohol-Anteil) zugemischt und anschliessend entsprechend Beispiel 1 extrudiert und vorbehandelt.

| Oberflächenspannung nach | 1 Std. | >61 mN/m |
|---|---|---|
| | 3 Wochen | >61 mN/m |
| | 3 Monaten | >61 mN/m |
| | nicht vorbehandelt | 34–36 mN/m |
| Wärmebeständigkeit VSP/A | | 122°C |
| Härte Shore D | | 56 |
| Zugfestigkeit (längs) | | 31 N/mm² |
| Abzugskraft nach Verklebung entsprechend Beispiel 1 | | >3,5 kp/2,4 cm (>34,3 N/2,4 cm); Folienabriss |

**Beispiel 11**

Die Folie entsprechend Beispiel 6 b) wurde nach Vorbehandlung mittels eines 50 μm dicken Films aus einem Äthylenacrylsäure-Copolymeren (EAA resin 455 E) mit einer Spanplatte bei einer Presstemperatur von 130°C und einem Druck von 10 kg/cm² (9,81 bar) verpresst. Die Verbindung zwischen der Folie entsprechend Beispiel 6 b) und dem EAA-Film war untrennbar. Beim Abzug des gesamten Verbundes von der Spanplatte erfolgte der Spanausriss.

**Beispiel 12**

Eine Mischung aus 70 Gew.-Teilen linear low density Polyäthylen (Dowlex 2045) und 30 Gew.- Teilen Cellulose (Arbocel B 600/30) wurde entsprechend Beispiel 3 zu einer 100 μm Folie kalandriert und anschliessend entsprechend aktiviert.

Die Folie wurde kalt auf Pappe mit Harnstoffharz, bestehend aus 100 Teilen Aerolite, 70 Teilen Wasser und 50 Teilen Härter (Ciba Geigy), und gegen sich selbst bei Raumtemperatur verpresst und 24 Std. bei Raumtemperatur gelagert.

Bei Abzug der Folie von der Pappe erfolgte Pappenspaltung. Bei Abzug der Folie von der Folie erfolgte Folienabriss.

**Patentansprüche**

1. Polyäthylen-Folie mit durch Oberflächenaktivierung verbesserten Haftungseigenschaften, gekennzeichnet durch einen Gehalt an Cellulose mit einem mittleren Teilchendurchmesser von 5 bis 100 μ und einer grössten mittleren Länge der Cellulose bis 200 μ.

2. Folie nach Anspruch 1, dadurch gekennzeichnet, dass sie 3 bis 50 Gew.-% Cellulose enthält, bezogen auf die Summe von Polyolefin und Cellulose.

3. Folie nach Anspruch 2, dadurch gekennzeichnet, dass sie 3 bis 30 Gew.-% Cellulose enthält.

4. Folie nach einem der Ansprüche 1 bis 3, dadurch gekennzeichnet, dass sie eine nach dem Sulfid- oder Sulfat-Verfahren hergestellte Cellulose enthält, welche eine Dicke von 10 bis 30 μm und eine Länge von 5 bis 100 μm besitzt.

5. Folie nach einem der vorhergehenden Ansprüche, dadurch gekennzeichnet, dass das Polyäthylen ein Polyäthylen hoher, mittlerer oder niederer Dichte, ein Mischpolymer mit Vinylverbindungen oder längerkettigen Olefinen mit einer Wärmebeständigkeit VSP/A über 80°C oder ein Gemisch davon ist.

6. Folie nach einem der vorhergehenden Ansprüche, dadurch gekennzeichnet, dass die Oberfläche durch Bestrahlung aktiviert ist.

7. Folie nach Anspruch 6, dadurch gekennzeichnet, dass die Oberfläche durch Corona-Behandlung aktiviert ist.

8. Folie nach Anspruch 6, dadurch gekennzeichnet, dass die Oberfläche durch Elektronenbestrahlung, UV-Bestrahlung oder/und Laserbestrahlung aktiviert ist.

9. Folie nach einem der Ansprüche 1 bis 5, dadurch gekennzeichnet, dass die Oberfläche durch Behandlung mit einer Flamme oder mit Ozon aktiviert ist.

10. Folie nach einem der vorhergehenden Ansprüche, dadurch gekennzeichnet, dass sie zusätzlich mineralische Füllstoffe enthält.

11. Folie nach Anspruch 10, dadurch gekennzeichnet, dass sie Glimmer, Talkum, Kieselsäure oder Silikate und TiO$_2$ enthält.

12. Folie nach Anspruch 10 oder 11, dadurch gekennzeichnet, dass sie 1 bis 50 Gew.-% mineralische Füllstoffe enthält, bezogen auf die Summe von Polyolefin und Cellulose.

13. Folie nach einem der vorhergehenden Ansprüche, dadurch gekennzeichnet, dass sie zusätzlich ein organisches Modifizierungsmittel enthält.

14. Folie nach Anspruch 13, dadurch gekennzeichnet, dass das Modifizierungsmittel auf Styrol und Elastomeren basiert.

15. Folie nach Anspruch 14, dadurch gekennzeichnet, dass das Elastomer ein Blockcopolymer von Styrol mit Butadien oder Styrol mit Isobutylen oder Styrol mit Isopren ist.

16. Folie nach Anspruch 13, dadurch gekennzeichnet, dass das Modifizierungsmittel ein Copolymerisat oder Pfropf-Copolymerisat von Äthylen mit reaktiven Monomeren ist.

17. Folie nach einem der Ansprüche 13 bis 16, dadurch gekennzeichnet, dass sie 0,5 bis 20 Gew.-% Modifizierungsmittel enthält, bezogen auf die Summe von Polyolefin und Cellulose.

18. Verfahren zur Herstellung einer Polyäthylenfolie mit vebesserten Haftungseigenschaften durch Formung der Folie nach üblichen Methoden und Anwendung einer Oberflächenaktivierungsbehandlung, dadurch gekennzeichnet, dass man als Füllstoff feinteilige Cellulose mit einem mittleren Teilchendurchmesser von 5 bis 100 µm bzw. einer grössten mittleren Länge von 200 µm zusetzt.

19. Verfahren nach Anspruch 18, dadurch gekennzeichnet, dass man 1 bis 50 Gew.-% Cellulose zusetzt, bezogen auf die Summe von Polyolefin und Cellulose.

20. Verfahren nach Anspruch 19, dadurch gekennzeichnet, dass man 3 bis 30 Gew.-% Cellulose zusetzt.

21. Verfahren nach einem der Ansprüche 18 bis 20, dadurch gekennzeichnet, dass man als Polyäthylen ein Polyäthylen hoher, mittlerer und niederer Dichte, ein Mischpolymer mit Vinylverbindungen oder längerkettigen Olefinen mit einer Wärmebeständigkeit VSP/A über 80 °C oder ein Gemisch davon verwendet.

22. Verfahren nach einem der Ansprüche 18 bis 21, dadurch gekennzeichnet, dass man die Oberfläche durch Bestrahlung aktiviert.

23. Verfahren nach Anspruch 22, dadurch gekennzeichnet, dass man zur Oberflächenaktivierung eine Corona-Behandlung vornimmt.

24. Verfahren nach Anspruch 22, dadurch gekennzeichnet, dass man zur Oberflächenaktivierung eine Elektronenbestrahlung, UV-Bestrahlung oder/und Laserbestrahlung durchführt.

25. Verfahren nach einem der Ansprüche 18 bis 21, dadurch gekennzeichnet, dass man die Oberfläche durch Behandlung mit einer Flamme oder mit Ozon aktiviert.

26. Verfahren nach einem der Ansprüche 18 bis 25, dadurch gekennzeichnet, dass man der Folienmasse auch mineralische Füllstoffe zusetzt.

27. Verfahren nach Anspruch 26, dadurch gekennzeichnet, dass man der Folienmasse Glimmer, Talkum, Kieselsäure, Silikate oder $TiO_2$ zusetzt.

28. Verfahren nach Anspruch 26 oder 27, dadurch gekennzeichnet, dass man der Folienmasse 1 bis 50 Gew.-% mineralische Füllstoffe zusetzt, bezogen auf die Summe von Polyolefin und Cellulose.

29. Verfahren nach einem der Ansprüche 18 bis 28, dadurch gekennzeichnet, dass man der Folienmasse ein organisches Modifizierungsmittel zusetzt.

30. Verfahren nach Anspruch 29, dadurch gekennzeichnet, dass das Modifizierungsmittel auf Styrol und Elastomeren basiert.

31. Verfahren nach Anspruch 30, dadurch gekennzeichnet, dass man als Elastomeres ein Block-Copolymer von Styrol mit Butadien oder Styrol mit Isobutylen oder Styrol mit Isopren verwendet.

32. Verfahren nach Anspruch 29, dadurch gekennzeichnet, dass man zur Modifizierung Copolymerisat oder Pfropf-Copolymerisat von Äthylen und reaktiven Monomeren verwendet.

33. Verfahren nach einem der Ansprüche 29 bis 32, dadurch gekennzeichnet, dass man 0,5 bis 20 Gew.-% Modifizierungsmittel zusetzt, bezogen auf die Summe von Polyolefin und Cellulose.

34. Verwendung einer Folie nach einem der vorhergehenden Ansprüche zur Heiss- und Kaltkaschierung mit oder ohne Klebstoff, Bedruckung oder Lackierung.

**Claims**

1. Polyethylene foil with adhesion properties improved by surface activation, characterised by a content of cellulose with an average particle diameter of 5 to 100 µ and a greatest average length of the cellulose of up to 200 µ.

2. Foil according to claim 1, characterised in that it contains 3 to 50 wt.% cellulose, referred to the sum of polyolefin and cellulose.

3. Foil according to claim 2, characterised in that it contains 3 to 30 wt.% cellulose.

4. Foil according to on of claims 1 to 3, characterised in that it contains a cellulose produced according to the sulphide or sulphate process which possesses a thickness of 10 to 30 µm. and a length of 5 to 100 µm.

5. Foil according to one of the preceding claims, characterised in that the polyethylene is a polyethylene of high, average or low density, a copolymer with vinyl compounds or long-chained olefins with a heat stability VSP/A of over 80 °C. or a mixture thereof.

6. Foil according to one of the preceding claims, characterised in that the surface is activated by irradiation.

7. Foil according to claim 6, characterised in that the surface is activated by corona treatment.

8. Foil according to claim 6, characterised in that the surface is activated by electron irradiation, UV irradiation and/or laser irradiation.

9. Foil according to one of claims 1 to 5, characterised in that the surface is activated by treatment with a flame or with ozone.

10. Foil according to one of the preceding claims, characterised in that it additionally contains mineral filling materials.

11. Foil according to claim 10, characterised in that it contains mica, talc, silicic acid or silicates and $TiO_2$.

12. Foil according to claim 10 or 11, characterised in that it contains 1 to 50 wt.% of mineral filling materials, referred to the sum of polyolefin and cellulose.

13. Foil according to one of the preceding claims, characterised in that it additionally contains an organic modifying agent.

14. Foil according to claim 13, characterised in that the modifying agent is based upon styrene and elastomers.

15. Foil according to claim 14, characterised in that the elastomer is a block co-polymer of styrene with butadiene or styrene with isobutylene or styrene with isoprene.

16. Foil according to claim 13, characterised in that the modifying agent is a co-polymer or graft co-polymer of ethylene with reactive monomers.

17. Foil according to one of claims 13 to 16, characterised in that it contains 0.5 to 20 wt.% of modifying agent, referred to the sum of polyolefin and cellulose.

18. Process for the production of polyethylene foils with improved adhesion properties by forming the foil according to usual methods and use of a surface activating treatment, characterised in that as filler material one adds finely divided cellulose with an average particle diameter of 5 to 100 μm. or a greatest average length of 200 μm.

19. Process according to claim 18, characterised in that one adds 1 to 50 wt.% cellulose, referred to the sum of polyolefin and cellulose.

20. Process according to claim 19, characterised in that one adds 3 to 30 wt.% of cellulose.

21. Process according to one of claims 18 to 20, characterised in that as polyethylene one uses a polyethylene of high, average and lower density, a co-polymer with vinyl compounds or long-chained olefins with a heat stability VSP/A of over 80°C. or a mixture thereof.

22. Process according to one of claims 18 to 21, characterised in that one activates the surface by irradiation.

23. Process according to claim 22, characterised in that for the surface activation one carries out a corona treatment.

24. Process according to claim 22, characterised in that for the surface activation one carries out an electron irradiation, UV irradiation and/or laser irradiation.

25. Process according to one of claims 18 to 21, characterised in that one activates the surface by treatment with a flame or with ozone.

26. Process according to one of claims 18 to 25, characterised in that one also adds mineral filling materials to the foil mass.

27. Process according to claim 26, characterised in that one adds to the foil mass mica, talc, silicic acid, silicates or TiO$_2$.

28. Process according to claim 26 or 27, characterised in that to the foil mass one adds 1 to 50 wt.% of mineral filling materials, referred to the sum of polyolefin and cellulose.

29. Process according to one of claims 18 to 28, characterised in that one adds to the foil mass an organic modifying agent.

30. Process according to claim 29, characterised in that the modifying agent is based upon styrene and elastomers.

31. Process according to claim 30, characterised in that as elastomer one uses a block co-polymer of styrene with butadiene or styrene with isobutylene or styrene with isoprene.

32. Process according to claim 29, characterised in that for the modification one uses co-polymer or graft co-polymer of ethylene and reactive monomers.

33. Process according to one of claims 29 to 32, characterised in that one adds 0.5 to 20 wt.% of modification agent, referred to the sum of polyolefin and cellulose.

34. Use of a foil according to one of the preceding claims for hot or cold coating with or without adhesive, printing or lacquering.

**Revendications**

1. Feuille de polyéthylène à propriétés adhésives améliorées par activation de surface, caractérisée par une teneur en cellulose ayant un diamètre de particules moyen de 5 à 100 μ et une longueur maximum moyenne de la cellulose jusqu'à 200 μ.

2. Feuille selon la revendication 1, caractérisée par le fàit qu'elle contient de 3 à 50% en poids de cellulose par rapport à la somme de polyoléfine et de cellulose.

3. Feuille selon la revendication 2, caractérisée par le fait qu'elle contient de 3 à 30% en poids de cellulose.

4. Feuille selon l'une des revendications 1 à 3, caractérisée par le fait qu'elle contient une cellulose préparée d'après le procédé au sulfure ou au sulfate et présentant une épaisseur de 10 à 30 μm et une longueur de 5 à 100 μm.

5. Feuille selon l'une des revendications précédentes, caractérisée par le fait que le polyéthylène est un polyéthylène de densité élevée, moyenne ou basse, un polymère mixte comportant des composés vinyliques ou des oléfines à longue chaîne ayant une résistance à la chaleur VSP/A supérieure à 80°C ou un de leurs mélanges.

6. Feuille selon l'une des revendications précédentes, caractérisée par le fait que la surface a été activée par rayonnement.

7. Feuille selon la revendication 6, caractérisée par le fait que la surface a été activée par traitement Corona.

8. Feuille selon la revendication 6, caractérisée par le fait que la surface a été activée par rayonnement électronique, par rayonnement UV et/ou par rayonnement laser.

9. Feuille selon l'une des revendications 1 à 5, caractérisée par le fait que la surface a été activée par traitement au moyen d'une flamme ou à l'aide d'ozone.

10. Feuille selon l'une des revendications précédentes, caractérisée par le fait qu'elle contient en plus des corps de charge minéraux.

11. Feuille selon la revendications 10, caractérisée par le fait qu'elle contient du mica, du talc, de l'acide silicique ou des cilicates et du TiO$_2$.

12. Feuille selon les revendications 10 ou 11, caractérisée par le fait qu'elle contient de 1 à 50% en poids de corps de charge minéraux par rapport à la somme de polyoléfine et de cellulose.

13. Feuille selon l'une des revendications précédentes, caractérisée par le fait qu'elle contient en plus un agent organique de modification.

14. Feuille selon la revendication 13, caractérisée par le fait que l'agent de modification est à base de styrène et d'élastomères.

15. Feuille selon la revendication 14, caractérisée par le fait que l'élastomère est un copolymère-bloc de styrène avec du butadiène ou de styrène avec de l'isobutylène ou de styrène avec de l'isoprène.

16. Feuille selon la revendication 13, caractérisée par le fait que l'agent de modification est un copolymérisat ou un copolymérisat-greffe d'éthylène avec des monomères réactifs.

17. Feuille selon l'une des revendications 13 à 16, caractérisée par le fait qu'elle contient de 0,5 à 20% en poids d'agent de modification par rapport à la somme de polyoléfine et de cellulose.

18. Procédé de préparation d'une feuille de polyéthylène à propriétés adhésives améliorées par formation de la feuille selon les méthodes usuelles et application d'un traitement d'activation de la surface, caractérisé par le fait que l'on ajoute, à titre de corps de charge, de la cellulose finement divisée présentant un diamètre de particules moyen de 5 à 100 µm et une longueur moyenne maximum de 200 µm.

19. Procédé selon la revendication 18, caractérisé par le fait que l'on ajoute de 1 à 50% en poids de cellulose par rapport à la somme de polyoléfine et de cellulose.

20. Procédé selon la revendication 19, caractérisé par le fait que l'on ajoute de 3 à 30% en poids de cellulose.

21. Procédé selon l'une des revendications 18 à 20, caractérisé par le fait que l'on applique, à titre de polyéthylène, un polyéthylène de densité élevée, moyenne ou basse, un polymère mixte contenant des composés vinyliques ou des oléfines à longue chaîne présentant une résistance à la chaleur VSP/A supérieure à 80 °C ou un de leurs mélanges.

22. Procédé selon l'une des revendications 18 à 21, caractérisé par le fait que l'on active la surface par rayonnement.

23. Procédé selon la revendication 22, caractérisé par le fait que, pour l'activation de la surface, on a recours à un traitement Corona.

24. Procédé selon la revendication 22, caractérisé par le fait que, pour l'activation de la surface, on effectue un rayonnement électronique, un rayonnement UV et/ou un rayonnement laser.

25. Procédé selon l'une des revendications 18 à 21, caractérisé par le fait que l'on active la surface par traitement au moyen d'une flamme ou avec de l'ozone.

26. Procédé selon l'une des revendications 18 à 25, caractérisé par le fait que l'on ajoute également à la masse à partir de laquelle est fabriquée la feuille, des corps de charge minéraux.

27. Procédé selon la revendication 26, caractérisé par le fait que l'on ajoute à la masse à partir de laquelle est fabriquée la feuille, du mica, du talc, de l'acide silicique, des silicates ou du $TiO_2$.

28. Procédé selon l'une des revendications 26 ou 27, caractérisé par le fait que l'on ajoute à la masse à partir de laquelle est fabriquée la feuille, de 1 à 50% en poids de corps de charge minéraux par rapport à la somme de polyoléfine et de cellulose.

29. Procédé selon l'une des revendications 18 à 28, caractérisé par le fait que l'on ajoute à la masse à partir de laquelle est fabriquée la feuille, un agent de modification organique.

30. Procédé selon la revendication 29, caractérisé par le fait que l'agent de modification est à base de styrène et d'élastomères.

31. Procédé selon la revendication 30, caractérisé par le fait qu'en tant qu'élastomères on utilise un copolymère-bloc de styrène avec du butadiène ou de styrène avec de l'isobutylène ou de styrène avec de l'isoprène.

32. Procédé selon la revendication 29, caractérisé par le fait que, pour la modification, on utilise un copolymérisat ou un copolymérisat-greffe d'éthylène et de monomères réactifs.

33. Procédé selon l'une des revendications 29 à 32, caractérisé par le fait que l'on ajoute de 0,5 à 20% en poids d'agent de modification par rapport à la somme de polyoléfine et de cellulose.

34. Application d'une feuille selon l'une des revendications précédentes, au placage à chaud ou à froid avec ou sans colle, à l'impression ou à l'application de peintures ou de vernis.

BENETZBARKEIT  $mN/m$

10 20 30 40 50 60 70 80

● = LAGERUNGSTEMPERATUR 20°C
× = LAGERUNGSTEMPERATUR 80°C

ALTERUNGSDAUER

0  1h  1  7  15  30  45  60  75  90  105  120  135  150  TAGE

13